# EUROPÄISCHE PATENTSCHRIFT

(11) **EP 2 200 114 B1**
(45) Veröffentlichungstag und Bekanntmachung des Hinweises auf die Patenterteilung: **16.10.2013**
(21) Anmeldenummer: 08022191.4
(22) Anmeldetag: 19.12.2008
(51) Int. Cl.: H01M 8/10, H01M 8/06

(54) **Reformer-Brennstoffzellen-System**
Reformer fuel cell system
Système de cellules de combustible de réformateur

(43) Veröffentlichungstag der Anmeldung: 23.06.2010
(73) Patentinhaber: Truma Gerätetechnik GmbH & Co. KG, 85640 Putzbrunn (DE)
(72) Erfinder: Schiegl, Andreas, 82041 Oberhaching (DE); Frank, Reinhard, 80331 München (DE)
(74) Vertreter: Müller - Hoffmann & Partner

(56) Entgegenhaltungen:
- EP-A- 1 523 053
- EP-A- 1 703 578
- DE-A1- 10 360 458
- US-A1- 2006 199 051
- US-A1- 2007 264 543

## Beschreibung

Die Erfindung betrifft ein Reformer-Brennstoffzellen-System nach dem Oberbegriff von Anspruch 1.

Brennstoffzellen benötigen zur Erzeugung von elektrischer und thermischer Energie als Reaktanden Wasserstoff und (Luft-)Sauerstoff. Zur Bereitstellung des Wasserstoffs bzw. eines wasserstoffhaltigen Gases sind verschiedene Reformierungsverfahren bekannt, wie z.B. Dampfreformierung, autotherme Reformierung, partielle Oxidation oder Cracken, bei denen das wasserstoffhaltige Gas durch die Umwandlung von gasförmigen und flüssigen Kohlenwasserstoffen bzw. Alkoholen erzeugt werden kann. Bekannte Energieträger sind z.B. Methanol, Ethanol, Diesel, Kerosin, JP-8, Erdgas (Methan), Propan oder Butan. Die genannten Reformierungsverfahren sind zumeist sehr komplex und erfordern einen hohen apparativen und regelungstechnischen Aufwand. In der Regel weisen sie eine Vielzahl von Einzelkomponenten wie Reformierreaktoren, Shiftstufen, Gasfeinreinigungsstufen (selektive Oxidation, Methanisierung), Wärmetauscher und Verdampfer auf.

Als Brennstoffzellen eignen sich so genannte Polymer-Elektrolyt-Membran-(PEM)-Brennstoffzellen, die je nach Betriebstemperatur eine mehr oder weniger aufwendige Reinigung des wasserstoffhaltigen Gases vor Eintritt in einen Anodenreaktionsraum der Brennstoffzelle erfordern. Während bei herkömmlichen Niedertemperatur-PEM-Brennstoffzellen (Betriebstemperatur 50 bis 100°C) in wasserstoffhaltigem Reformatgas nur sehr geringe CO-Anteile im zweistelligen ppm-Bereich toleriert werden können, sind herkömmliche Hochtemperatur-PEM-Brennstoffzellen (Betriebstemperatur 140 bis 180°C) in der Lage, auch wasserstoffhaltiges Reformatgas mit CO-Anteilen in einer Größenordnung bis 20.000 ppm zu verarbeiten.

Aus der US 2002/0182458 ist ein Reformersystem bekannt, das mit einer Hochtemperatur-PEM-Brennstoffzelle gekoppelt ist. Das wasserstoffhaltige Gas aus dem Reformer durchströmt nachfolgend eine oder mehrere Gasreinigungsstufen (Hoch- und Niedertemperatur-Shift), bevor es mit einem CO-Anteil von 10.000 bis 20.000 ppm in die Hochtemperatur-PEM-Brennstoffzelle eintritt. In der Brennstoffzelle sorgt ein spezieller Katalysator, der sich von dem üblichen Anodenkatalysator der Brennstoffzelle unterscheidet, für eine weitere katalytische Reduzierung des CO-Anteils auf Werte kleiner 5.000 ppm.

Ebenso sind Hochtemperatur-Festoxid-Brennstoffzellen (SOFC) und Schmelz-Carbonat-Brennstoffzellen (MCFC) bekannt, in denen gasförmige und flüssige Kohlenwasserstoffe direkt bzw. unter Vorschaltung einer so genannten Pre-Reforming-Stufe bei Temperaturen von 600 bis 1000°C und unter Zusatz von (Luft-)Sauerstoff verstromt werden. Nachteil dieser Systeme sind eine geringe thermische Zyklierbarkeit, lange Aufheiz- und Abkühlzeiten sowie hohe Anforderungen an die eingesetzten Materialien (Dichtungen und Bipolarplatten).

Aus der US 2007/0264543 A1 ist ein Reformer-Brennstoffzellen-System bekannt, bei dem ein Reformer aus einem Flüssigkraftstoff ein wasserstoffhaltiges Gas generiert. Das Gas wird direkt in eine Brennstoffzelle geführt, ohne davor in einem Shift-Reaktor verarbeitet zu werden.

In der EP 1 523 053 A2 wird der Aufbau einer Polymerelektrolytmembran für Brennstoffzellen beschrieben. Eine derartige Membran soll eine hohe Toleranz gegenüber Verunreinigungen durch Kohlenmonoxid aufweisen.

Aus der DE 103 60 458 A1 ist ein Brennstoffzellensystem mit einer Brennstoffzelle und einem Reformer bekannt. Zwischen dem Reformer und der Brennstoffzelle sind zwei Wärmetauscher angeordnet, die durch das vom Reformer zur Brennstoffzelle strömende Reformatgas erwärmt werden. Im Gegenstrom werden die Wärmetauscher von Luft durchströmt, die sich in dem jeweiligen Wärmetauscher erwärmt (und insoweit als Kühlmittel für den Wärmetauscher dient) und nachfolgend dem Reformer oder der Brennstoffzelle als Reaktionsluft zur Versorgung der Reaktionsprozesse im Reformer oder in der Brennstoffzelle zugeführt wird.

Der Erfindung liegt die Aufgabe zugrunde, ein System und ein Verfahren anzugeben, mit dem der apparative Aufwand vor allem bei dem Reformersystem und der dort üblichen Gasreinigung gesenkt werden kann.

Die Aufgabe wird erfindungsgemäß durch ein Reformer-Brennstoffzellen-System mit den Merkmalen von Anspruch 1 und ein Verfahren nach Anspruch 6 gelöst. Vorteilhafte Ausgestaltungen sind in den abhängigen Ansprüchen angegeben.

Ein Reformer-Brennstoffzellen-System weist einen Reformer mit einem Reformierreaktor zum Umwandeln eines Kohlenwasserstoff-Fluids (Flüssigkeits- oder Gasstrom) in ein wasserstoffhaltiges Gas sowie wenigstens eine Hochtemperatur-PEM-Brennstoffzelle mit einem Anodenreaktionsraum zum Umwandeln des in dem wasserstoffhaltigen Gas enthaltenen Wasserstoffs zusammen mit Sauerstoff in Strom. Wärme und Produktwasser, auf. Zwischen dem Reformlerreaktor und dem Anodenreaktionsraum ist im Unterschied zum Stand der Technik keine Gasreinigungseinrichtung vorgesehen, derart, dass das in dem Reformierreaktor a wasserstoffhaltige Gas direkt, ohne zwischengeschaltete Gasreinigungseinrichtung in den Anodenreaktionsraum führbar ist.

In bekannter Weise kann dabei aus einem Kraftstoffvorrat mit gasförmigen oder flüssigen Kohlenwasserstoffen bzw. Alkoholen - je nach Reformierungsverfahren - unter Zuführung von Wasserdampf und/oder Luft ein wasserstoffhaltiges Reformatgas erzeugt, das als wesentliche Bestandteile Wasserstoff, Kohlendioxid, Kohlenmonoxid. Wasserdampf und gegebenenfalls Stickstoff (bei autothermer Reformierung oder partieller Oxidation) enthält. In herkömmlichen Reformer-Brennstoffzellen-Systemen wird das wasserstoffhaltige Reformatgas durch eine oder mehrere Gasreinigungsstufen geleitet, wie z.B. durch Hoch- oder Niedertemperatur-Shiftstufen sowie durch Stufen zur selektiven Oxidation oder Methanisierung. Aufgabe dieser Gasreinigungsstufen ist es, den CO-Gehalt im Reformatgas auf ein für den jeweiligen Brennstoffzellentyp geeignetes Niveau zu senken, um akzeptable Performancewerte zu erreichen. Bei Niedertemperatur-PEM-Brennstoffzellen muss der CO-Anteil auf Werte kleiner 100 ppm reduziert werden. Bei Hochtempe-ratur-PEM-Brennstoffzellen gemäß dem Stand der Technik sollten die Werte unter 20.000 ppm liegen.

Erfindungsgemäß wird nun nicht mehr das Reformersystem mit seinen Gasreinigungsstufen an die Brennstoffzelle angepasst, sondern die Brennstoffzelle, speziell eine Hochtemperatur-PEM-Brennstoffzelle, an das vom Reformierreaktor erzeugte wasserstoffhaltige Gas. Dadurch lässt sich der apparative, verfahrenstechnische und regelungstechnische Aufwand im Reformersystem deutlich reduzieren. Zu diesem Zweck wird das wasserstoffhaltige Reformatgas aus dem Reformierreaktor direkt, also ohne die bisher übliche Gasreinigung - allenfalls nur über einen zwischengeschalteten Wärmetauscher zur Verringerung der ReformatgasTemperatur - in dem Anodenreaktionsraum der Hochtemperatur-PEM-Brennstoffzelle eingeleitet.

Der CO-Anteil im Reformatgas liegt je nach Reformierungsverfahren nach dem Austreten aus dem Reformierreaktor zwischen 3 und 25 Vol.-%. Um einen ordnungsgemäßen Betrieb der Brennstoffzelle mit akzeptablen Leistungswerten zu erreichen, bestehen verschiedene Möglichkeiten, die Hochtemperatur-PEM-Brennstoffzelle an hohe CO-Konzentrationen anzupassen. Diese Möglichkeiten werden in einigen der abhängigen Ansprüche angegeben und später noch erläutert.

Bevorzugte Anwendungsbereiche des Systems mit einer Leistungsgröße von wenigen Watt bis mehreren Kilowatt ist ein Einsatz als APU-System (Auxiliary Power Unit) für die Bordstromversorgung in Freizeitfahrzeugen, Nutzfahrzeugen, Pkws sowie Booten oder Yachten. Ebenso ist ein Einsatz als Stromgenerator für Off-Grid-Anwendungen bzw. in Kraft-Wärme-Kopplungssystemen für die dezentrale Energieversorgung möglich.

Die Wirkungsweise der oben genannten Reformierungsarten ist an sich bekannt und im Stand der Technik vielfältig beschrieben. Die Reformersysteme können als Plattenreaktoren oder in Zylinderform mit monolithischen Katalysatorwaben und/oder Katalysatorschüttungen ausgeführt sein.

Die Brennstoffzelle kann aus einer Einzelbrennstoffzelle bzw. einer Mehrzahl von Einzelbrennstoffzellen, die in Form eines Stapels (Stack) angeordnet sind, bestehen.

Der grundsätzliche Aufbau einer Brennstoffzelle mit anoden- und kathodenseitigen Reaktionsräumen ist bekannt und muss daher an dieser Stelle nicht mehr im Einzelnen beschrieben werden.

In Hochtemperatur-PEM-Brennstoffzellen finden vorrangig Phosphorsäure-dotierte Polybenzimidazol-Membranen Verwendung. Denkbar sind jedoch auch andere Kunststoffe, die im Temperaturbereich von 100 bis maximal 300°C, bevorzugt im Bereich 150 bis 250°C, insbesondere zwischen 190 und 250°C protonenleitend sind bzw. durch entsprechende Zugaben/Dotierungen protonenleitfähig gemacht werden können.

Als Katalysatoren, insbesondere für den Anodenkatalysator in dem Anodenreaktionsraum, können alle Arten von Edel- und Nichtedelmetallen dienen. Bevorzugt werden Platin-haltige Katalysatoren, wobei als weitere Materialien unter anderem Pd, Ru, Fe, Ni, Au, Ag, Rh, Ir, Co, W, Mo, Ce, Cu, Zn, Al, Zr bzw. Legierungen davon mit oder ohne Pt - auch in Form von nanostrukturierten Katalysatoren - denkbar sind.

Die Brennstoffzelle kann unter Druck bzw. unter annähernd atmosphärischen Bedingungen betrieben werden, wobei letzteres den Energiebedarf der Peripheriesysteme (Luft- und Gaspumpen) verringert. Der Aufbau erfolgt mit Materialien, die den Temperaturanforderungen genügen und im Stand der Technik bekannt sind, wie z.B. Bipolarplatten aus Metall oder Kohlenstoff-Kunststoff-Komposit-Materialien.

Stromauf von dem Anodenreaktionsraum der Hochtemperatur-PEM-Brennstoffzelle, also zwischen dem Reformierreaktor und dem Anodenreaktionsraum, kann eine Kühlvorrichtung vorgesehen sein, durch die die Brennstoffzelle in einem Temperaturbereich zwischen 150 und 250°C, insbesondere zwischen 190 und 250°C betreibbar ist. Die Kühlvorrichtung dient zum Kühlen des wasserstoffhaltigen Reformatgases, um in der stromab liegenden Brennstoffzelle den angestrebten Temperaturbereich einzustellen. Falls die Temperatur des Reformatgases vor dem Eintritt in den Anodenreaktionsraum der Brennstoffzelle zu hoch ist, kann in die Zuleitung zwischen Reformierreaktor und Brennstoffzelle z.B. ein Wärmetauscher zur Absenkung der Reformatgastemperatur integriert werden.

Dabei hat sich herausgestellt, dass eine Erhöhung der Betriebstemperatur der Hochtemperatur-PEM-Brennstoffzelle auf Werte größer als 180°C zweckmäßig sein kann, um das Gleichgewicht zwischen Adsorption und Desorption von CO-Molekülen auf dem anodenseitigen Katalysator in Richtung Desorption zu verschieben. Dadurch wird die Gefahr einer Vergiftung des Anodenkatalysators in der Brennstoffzelle durch einen hohen CO-Anteil in dem zugeführten Reformatgas verringert, was es ermöglicht, das Reformatgas keiner Gasreinigung zur Verringerung des CO-Anteils unterziehen zu müssen.

Die Kühlvorrichtung kann einen Wärmetauscher aufweisen. Wärmetauscher ermöglichen es in besonders eleganter Weise, eine Kühlwirkung zu erzielen und dabei die gewonnene Wärme sinnvoll in anderer Weise in dem System zu nutzen.

Der Wärmetauscher kann eine Strömungsführung für das aus dem Reformer strömende wasserstoffhaltige Gas sowie im Gleichstrom oder im Gegenstrom dazu eine Strömungsführung für ein Kühlmittel aufweisen.

Bei diesem Kühlmittel kann es sich um Reaktionsluft handeln, die stromab von dem Wärmetauscher einer Kathodenseite der Brennstoffzelle und/oder dem Reformierreaktor zuführbar ist. Die z.B. aus der Umgebung zugeführte Reaktionsluft wird auf diese Weise in dem Wärmetauscher durch das aus dem Reformer strömende wasserstoffhaltige Gas angewärmt und kann als vorgewärmte Reaktionsluft der Brennstoffzelle oder dem Reformierreaktor zugeführt werden. Dies führt zu einer Verbesserung der nachfolgenden Prozesse.

Die Brennstoffzelle kann durch ein Temperiermedium temperierbar, also kühl- oder erwärmbar sein, wobei dieses Temperiermedium auch als Kühlmittel für den Wärmetauscher genutzt werden kann. So ist es möglich, dass das Temperiermedium zunächst den Wärmetauscher durchströmt und dort zur Kühlung des wasserstoffhaltigen Reformatgases dient. Danach, also stromab von dem Wärmetauscher, wird das Temperiermedium zu der Brennstoffzelle geführt, um die Brennstoffzelle in bekannter Weise zu temperieren (kühlen oder erwärmen).

Die Hochtemperatur-PEM-Brennstoffzelle kann eine Isoliervorrichtung aufweisen, derart, dass ein annähernd isothermer Betrieb der Brennstoffzelle erreichbar ist. Ein möglichst isothermer Betrieb der Brennstoffzelle mit keinen bzw. nur sehr geringen Temperaturgradienten (z.B. zwischen 0 und 10 K) im Stack dient dazu, eine Verringerung der Performance aufgrund partiell niedriger Temperaturen, vor allem im Bereich der Randzellen des Brennstoffzellenstacks und/oder im Bereich der Zuführung und Verteilung der Reaktanden in den Reaktionsräumen, zu vermeiden. Der isotherme Betrieb stellt somit sicher, dass nicht einzelne Bereiche der Brennstoffzelle, insbesondere der Anodenkatalysator, durch eine z.B. zu niedrige Temperatur bei dem erfindungsgemäß gegebenen hohen CO-Anteil "vergiftet", also in ihrer Wirksamkeit vermindert werden können.

Der Anodenreaktionsraum kann einen Katalysator aufweisen, der auch bei einem CO-Anteil am gesamten Gasstrom von mehr als 3 Vol.-% eine ausreichende Aktivität für die Wasserstoff-Aufspaltung in der Brennstoffzelle aufweist. Zweck dieser Maßnahme ist eine Anpassung der Elektrochemie im Inneren der Brennstoffzelle. Dies kann durch eine generelle Erhöhung des Katalysatoranteils in der Anoden-Katalysatorschicht und/oder durch die Verwendung von speziellen hochselektiven Katalysatormaterialien mit höherer CO-Toleranz erfolgen. Z.B. kann der Katalysatoranteil (beispielsweise der Anteil von Pt) in der Katalysatorschicht gegenüber dem Stand der Technik verdoppelt werden, also z.B. von üblichen 2 mg/cm² auf 4 mg/cm² oder mehr erhöht werden.

Der Reformer kann mit einer Mischung aus Wasserdampf und dem Kohlenwasser-Fluid betrieben werden. Dabei kann es zweckmäßig sein, wenn der Wasserdampf und das Kohlenwasserstoff-Fluid mit einem Verhältnis (S/C-Verhältnis, steam-tocarbon-ratio) größer als 3 in dem Reformer einleitbar sind. Durch diese Erhöhung des S/C-Verhältnisses kann eine Verringerung der CO-Konzentration im Reformatgas erreicht werden, wodurch das Fehlen von zwischengeschalteten Gasreinigungsstufen ausgeglichen werden kann. Das Reformatgas enthält damit relativ viel Wasserdampf, was den ppm-Anteil von CO zwangsläufig herabsetzt.

Im Betrieb des Reformer-Brennstoffzellen-Systems wird ein Großteil des Wasserstoffs nach dem Eintritt des Reformatgases in den Anodenreaktionsraum der Hochtemperatur-PEM-Brennstoffzelle zusammen mit dem der Kathodenseite zugeführten (Luft-)Sauerstoff in Strom, Wärme und Produktwasser umgewandelt. Die zugrunde liegende elektrochemische Reaktion, die im Inneren einer Brennstoffzelle erfolgt, wird als bekannt vorausgesetzt.

Das so genannte Anoden-Offgas, welches nach der Reaktion aus dem Anodenreaktionsraum abgeführt wird, besteht aus nicht umgewandeltem Restwasserstoff sowie den restlichen Reformatgasbestandteilen (Kohlenmonoxid, Kohlendioxid, Wasserdampf sowie gegebenenfalls Stickstoff). Das Anoden-Offgas kann nach dem Verlassen des Anodenreaktionsraums aufgrund des hohen Heizwerts (CO, RestWasserstoff) zur weiteren thermischen Verwertung in das Reformersystem zurückgeführt werden.

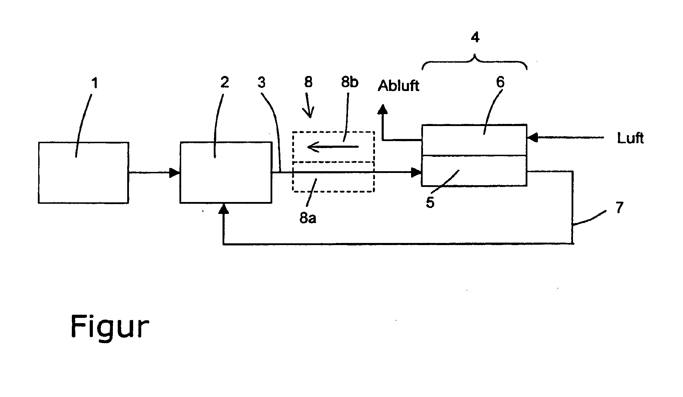

Diese und weitere Vorteile und Merkmale werden nachfolgend anhand eines Beispiels näher erläutert. Die einzige Figur zeigt den prinzipiellen Aufbau eines erfindungsgemäßen Reformer-Brennstoffzellen-Systems.

In einem Kraftstoffvorrat 1 wird ein Kraftstoff, insbesondere ein gasförmiger oder flüssiger Kohlenwasserstoff bzw. ein Alkohol gelagert. Der Kraftstoff wird aus dem Kraftstoffvorrat 1 zu einem Reformierreaktor 2 geführt, der seinerseits Bestandteil eines hier nicht näher zu erläuternden, an sich bekannten Reformersystems ist.

In dem Reformierreaktor 2 wird der Kraftstoff in ein wasserstoffhaltiges Gas gewandelt, welches über eine Zuführung 3 zu einer Brennstoffzelle 4 geleitet wird. Das den Reformierreaktor 2 verlassende Reformatgas kann neben Wasserstoff auch noch andere Gasbestandteile, wie z.B. Kohlenmonoxid, Kohlendioxid, Wasserdampf sowie gegebenenfalls Stickstoff aufweisen.

Das Reformatgas wird von dem Reformierreaktor 2 über die Zuführung 3 direkt in einen zu der Brennstoffzelle 4 gehörenden Anodenreaktionsraum 5 geführt. Im Unterschied zu bekannten Reformer-Brennstoffzellen-Systemen ist dabei zwischen dem Reformierreaktor 2 und dem Anodenreaktionsraum 5 keine Gasreinigungsstufe vorgesehen.

Bei der Brennstoffzelle 4 handelt es sich um eine Hochtemperatur-PEM-Brennstoffzelle, deren Aufbau und Funktionsweise an sich bekannt ist.

Durch einen an den Anodenreaktionsraum 5 angrenzenden Kathodenreaktionsraum 6 wird Umgebungsluft geführt. Der in der Umgebungsluft enthaltene LuftSauerstoff reagiert in bekannter Weise in dem Kathodenreaktionsraum 6. Nachdem das einer Brennstoffzelle zugrunde liegende Prinzip im Stand der Technik bereits in vielfältiger Weise beschrieben worden ist, erübrigt sich an dieser Stelle eine eingehendere Erläuterung.

Nach Durchströmen des Kathodenreaktionsraums 6 wird die Luft als Abluft abgeführt.

Der den Anodenreaktionsraum 5 verlassende Gasstrom wird häufig als Anoden-Offgas bezeichnet. Er kann über eine Rückführung 7 zurück zu dem Reformierreaktor 2 geführt werden. Es ist bekannt, dass das Anoden-Offgas neben nicht umgewandeltem Restwasserstoff weitere restliche Reformatgasbestandteile, wie Kohlenmonoxid, Kohlendioxid, Wasserdampf sowie gegebenenfalls Stickstoff, umfasst.

Es kann daher nach dem Verlassen des Anodenreaktionsraums 5 aufgrund seines hohen Heizwerts (CO, Restwasserstoff) zur weiteren thermischen Verwertung in das Reformersystem zurückgeführt werden.

Bei einer Variante ist in der Zuführung zwischen dem Reformierreaktor 2 und dem Anodenreaktionsraum 5 ein als Kühlvorrichtung dienender Wärmetauscher 8 angeordnet.

Der Wärmetauscher 8 weist eine zu der Zuführung 3 gehörende erste Strömungsführung 8a sowie auf der anderen Seite eine zweite Strömungsführung 8b zum Führen eines Kühlmittels im Gleich- oder Gegenstrom auf.

Das Vorsehen des Wärmetauschers 8 kann sinnvoll sein, falls die Temperatur des Reformatgases vor dem Eintritt in den Anodenreaktionsraum 5 der Brennstoffzelle 4 zu hoch ist. Als Kühlmittel kann dabei die der Brennstoffzelle 4 und/oder dem Reformierreaktor 2 zugeführte Reaktionsluft verwendet werden, um diese vorzuwärmen. Alternativ kann auch das Kühlmittel der Brennstoffzelle 4 (Luft oder flüssige Wärmeträgermaterialien) genutzt werden.

## Patentansprüche

1. Reformer-Brennstoffzellen-System, mit
- einem Reformer mit einem Reformierreaktor (2) zum Umwandeln eines Kohlenwasserstoff-Fluids in ein wasserstoffhaltiges Gas; und mit
- wenigstens einer Hochtemperatur-PEM-Brennstoffzelle (4) mit einem Anodenreaktionsraum (5) zum Umwandeln des in dem wasserstoffhaltigen Gas enthaltenen Wasserstoffs zusammen mit Sauerstoff in Strom, Wärme und Produktwasser, und mit einem Kathodenreaktionsraum (6);
wobei
- dem Kathodenreaktionsraum (6) Umgebungsluft als Reaktionsluft zuführbar ist;
- stromauf von dem Anodenreaktionsraum (5) der Hochtemperatur-PEM-Brennstoffzelle (4) eine Kühlvorrichtung vorgesehen ist;
- die Kühlvorrichtung einen Wärmetauscher (8) aufweist;
- das aus dem Reformierreaktor (2) ausgetretene wasserstoffhaltige Gas über den Wärmetauscher (8) in den Anodenreaktionsraum (5) führbar ist, und wobei
- das Kohlenwasserstoff-Fluid Propan und/oder Butan aufweist,
**dadurch gekennzeichnet, dass**
- die Brennstoffzelle (4) durch ein Temperiermedium temperierbar ist;
- das Temperiermedium der Brennstoffzelle (4) auch als Kühlmittel für den Wärmetauscher (8) nutzbar ist, wobei das Kühlmittel stromab von dem Wärmetauscher (8) als Temperiermedium zu der Brennstoffzelle (4) zuführbar ist, um die Brennstoffzelle (4) zu temperieren; und dass
- das Temperiermedium ein flüssiges Wärmeträgermaterial oder Kühlluft ist.

2. Reformer-Brennstoffzellen-System nach Anspruch 1, **dadurch gekennzeichnet, dass** durch die Kühlvorrichtung (8) die Brennstoffzelle (4) in einem Temperaturbereich zwischen 150 und 250 °C. insbesondere zwischen 190 und 250 °C betreibbar ist.

3. Reformer-Brennstoffzellen-System nach einem der vorstehenden Ansprüche, **dadurch gekennzeichnet, dass** der Wärmetauscher (8) eine Strömungsführung für das aus dem Reformer strömende wasserstoffhaltige Gas und im Gleichstrom oder im Gegenstrom dazu eine Strömungsführung für ein Kühlmittel aufweist.

4. Reformer-Brennstoffzellen-System nach einem der vorstehenden Ansprüche, **dadurch gekennzeichnet, dass** die Hochtemperatur-PEM-Brennstoffzelle (4) eine Isollervorrichtung aufweist, derart, dass ein annähernd Isothermer Betrieb der Brennstoffzelle (4) mit einem Temperaturgradienten von höchstens 10 K innerhalb eines Stacks erreichbar ist.

5. Reformer-Brennstoffzellen-System nach einem der vorstehenden Ansprüche, **dadurch gekennzeichnet, dass**
- der Reformer mit einer Mischung aus Wasserdampf und Propan und/oder Butan betreibbar ist: und dass
- der Wasserdampf und Propan und/oder Butan mit einem Verhältnis (S/C-Verhältnis) größer als 3 in den Reformer einleitbar sind.

6. Verfahren zum Betreiben eines Reformer-Brennstoffzellen-Systems nach einem der vorstehenden Ansprüche, mit den Schritten:
- Umwandeln von Propan und/oder Butan in ein wasserstoffhaltiges Gas in einem Reformlerreaktor (2) eines Reformers:
- direktes Führen des wasserstoffhaltigen Gases in einen Anodenreaktionsraum (5) einer Hochtemperatur-PEM-Brennstoffzelle (4), ohne das wasserstoffhaltige Gas einer Gasreinigung zu unterziehen:
- Verstromen des wasserstoffhaltigen Gases in der Brennstoffzelle (4) zusammen mit zusätzlich zu der Brennstoffzelle (4) zugeführtem Sauerstoff, der in einer der Brennstoffzelle zugeführten Reaktionsluft enthalten ist;
- Kühlen eines stromauf von dem Anodenreaktionsraum (5) angeordneten Wärmetauschers mit Hilfe eines zum Temperieren der Brennstoffzelle (4) dienenden Tempertermediums, wobei das Temperiermedium Kühlluft ist.

## Claims

1. Reformer-fuel cell system comprising
- a reformer having a reformer reactor (2) for conversion of a hydrocarbon fluid to a hydrogen-containing gas; and comprising
- at least one high-temperature PEM fuel cell (4) having an anode reaction space (5) for conversion of the hydrogen present in the hydrogen-containing gas together with oxygen to power, heat and product water, and having a cathode reaction space (6);
where
- ambient air can be supplied as reaction air to the cathode reaction space (6);
- a cooling apparatus has been provided upstream of the anode reaction space (5) of the high-temperature PEM fuel cell (4);
- the cooling apparatus has a heat exchanger (8);
- the hydrogen-containing gas leaving the reformer reactor (2) can be conducted through the heat exchanger (8) into the anode reaction space (5), and where
- the hydrocarbon fluid comprises propane and/or butane,
**characterized in that**
- the temperature of the fuel cell (4) can be controlled by a temperature control medium;
- the temperature control medium of the fuel cell (4) is also utilizable as a coolant for the heat exchanger (8), in which case the coolant can be supplied as a temperature control medium to the fuel cell (4) downstream of the heat exchanger (8), in order to control the temperature of the fuel cell (4); and **in that**
- the temperature control medium is a liquid heat carrier material or cooling air.

2. Reformer-fuel cell system according to Claim 1, **characterized in that** the cooling apparatus (8) allows operation of the fuel cell (4) within a temperature range between 150 and 250°C, especially between 190 and 250°C.

3. Reformer-fuel cell system according to either of the preceding claims, **characterized in that** the heat exchanger (8) has a flow arrangement for the hydrogen-containing gas flowing out of the reformer and, in concurrent or countercurrent thereto, a flow arrangement for a coolant.

4. Reformer-fuel cell system according to any of the preceding claims, **characterized in that** the high-temperature PEM fuel cell (4) has an insulation apparatus such that virtually isothermal operation of the fuel cell (4) is achievable with a temperature gradient of not more than 10 K within a stack.

5. Reformer-fuel cell system according to any of the preceding claims, **characterized in that**
- the reformer can be operated with a mixture of steam and propane and/or butane; and **in that**
- the steam and propane and/or butane can be introduced into the reformer with a ratio (S/C ratio) greater than 3.

6. Method for operating a reformer-fuel cell system according to any of the preceding claims, comprising the steps of:
- converting propane and/or butane to a hydrogen-containing gas in a reformer reactor (2) of a reformer;
- directly conducting the hydrogen-containing gas into an anode reaction space (5) of a high-temperature PEM fuel cell (4) without subjecting the hydrogen-containing gas to a gas purification;
- flowing the hydrogen-containing gas in the fuel cell (4) together with oxygen which is additionally supplied to the fuel cell (4) and is present in reaction air supplied to the fuel cell;
- cooling a heat exchanger disposed upstream of the anode reaction space (5) with the aid of a temperature control medium which serves to control the temperature of the fuel cell (4), the temperature control medium being cooling air.

## Revendications

1. Système de cellules de combustible à reformeur, avec
- un reformeur avec un réacteur de reformage (2) pour transformer un fluide hydrocarbure en gaz contenant de l'hydrogène ; et avec
- au moins une cellule de combustible PEM à haute température (4) avec un espace de réaction anodique (5) pour transformer l'hydrogène contenu dans le gaz contenant de l'hydrogène, avec l'azote, en courant, en chaleur et en eau de produit, et avec un espace de réaction cathodique (6) ;
étant précisé
- que de l'air ambiant est apte à être amené comme air de réaction dans l'espace de réaction cathodique (6) ;
- qu'il est prévu en amont de l'espace de réaction anodique (5) de la cellule de combustible PEM à haute température (4) un dispositif de refroidissement ;
- que le dispositif de refroidissement comporte un échangeur de chaleur (8) ;
- que le gaz contenant de l'hydrogène qui est sorti du réacteur de reformage (2) est apte à être amené par l'intermédiaire de l'échangeur de chaleur (8) dans l'espace de réaction anodique (5), et
- que le fluide hydrocarbure comporte du propane et/ou du butane,
**caractérisé en ce que**
- la cellule de combustible (4) est apte à être tempérée grâce à un agent d'équilibrage de température ;
- l'agent d'équilibrage de température de la cellule de combustible (4) est utilisable aussi comme réfrigérant pour l'échangeur de chaleur (8), étant précisé que le réfrigérant est apte à être amené comme agent d'équilibrage de température dans la cellule de combustible (4) en aval de l'échangeur de chaleur (8) afin de tempérer la cellule de combustible (4) ; et
- l'agent d'équilibrage de température est un matériau caloporteur fluide ou de l'air de refroidissement.

2. Système de cellules de combustible à reformeur selon la revendication 1, **caractérisé en ce que** grâce au dispositif de refroidissement (8), la cellule de combustible (4) est apte à fonctionner dans une plage de température entre 150 et 250°C, en particulier entre 190 et 250°C.

3. Système de cellules de combustible à reformeur selon l'une des revendications précédentes, **caractérisé en ce que** l'échangeur de chaleur (8) comporte une conduite d'écoulement pour le gaz contenant de l'hydrogène qui sort du reformeur, et, dans le même sens ou à contre-courant, une conduite d'écoulement pour un réfrigérant.

4. Système de cellules de combustible à reformeur selon l'une des revendications précédentes, **caractérisé en ce que** la cellule de combustible PEM à haute température (4) comporte un dispositif isolant, de telle sorte qu'on puisse obtenir un fonctionnement approximativement isotherme de ladite cellule de combustible (4) avec un gradient de température de 10 K au maximum, à l'intérieur d'une pile.

5. Système de cellules de combustible à reformeur selon l'une des revendications précédentes, **caractérisé en ce que**
- le reformeur est apte à fonctionner avec un mélange de vapeur d'eau et de propane et/ou de butane ; et **en ce que**
- la vapeur d'eau et le propane et/ou le butane sont aptes à être introduits dans le reformeur avec un rapport (rapport S/C) supérieur à 3.

6. Procédé pour faire fonctionner un système de cellules de combustible à reformeur selon l'une des revendications précédentes, avec les étapes suivantes :
- transformation du propane et/ou du butane en gaz contenant de l'hydrogène, dans un réacteur de reformage (2) d'un reformeur ;
- amenée directe du gaz contenant de l'hydrogène dans un espace de réaction anodique (5) d'une cellule de combustible PEM à haute température (4), sans soumettre le gaz contenant de l'hydrogène à une purification de gaz ;
- transformation en électricité du gaz contenant de l'hydrogène dans la cellule de combustible (4), avec de l'oxygène qui est amené en supplément dans ladite cellule de combustible (4) et qui est contenu dans un air de réaction amené dans la cellule de combustible ;
- refroidissement d'un échangeur de chaleur disposé en amont de l'espace de réaction anodique (5), à l'aide d'un agent d'équilibrage de température qui sert à tempérer la cellule de combustible (4), l'agent d'équilibrage de température étant constitué par de l'air de refroidissement.
